## Europäisches Patentamt

## European Patent Office

## Office européen des brevets

(19)

(11) **EP 1 276 211 B1**

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(51) Int Cl.$^7$: **H02K 17/08**, H02K 3/28, H02K 5/128

(21) Anmeldenummer: **01130172.8**

(22) Anmeldetag: **19.12.2001**

(54) **Verfahren zum Auslegen der Statorwicklung eines Asynchronmotors eines Kreiselpumpenaggregats**

Method for designing the layout of a winding for an asynchron motor of a centrifugal pump device

Méthode pour concevoir un enroulement de moteur asynchrone pour une pompe centrifuge

(84) Benannte Vertragsstaaten:
**CH DE FR GB IT LI**

(30) Priorität: **11.07.2001 EP 01116893**

(43) Veröffentlichungstag der Anmeldung:
**15.01.2003 Patentblatt 2003/03**

(73) Patentinhaber: **Grundfos a/s**
**8850 Bjerringbro (DK)**

(72) Erfinder: **Rasmussen, Claus B.**
**8860 Ulstrup (DK)**

(74) Vertreter: **Vollmann, Heiko, Dipl.-Ing. et al**
**Patentanwälte Wilcken & Vollmann,**
**Bei der Lohmühle 23**
**23554 Lübeck (DE)**

(56) Entgegenhaltungen:
**FR-A- 2 404 946        GB-A- 306 099**
**GB-A- 1 270 289**

# EP 1 276 211 B1

**Beschreibung**

Die Erfindung betrifft ein Verfahren zum Auslegen der Statorwicklung eines Asynchronmotors eines Kreiselpumpenaggregats gemäß den im Oberbegriff des Anspruchs 1 angegebenen Merkmalen sowie Kreiselpumpenaggregate mit einem Asynchronmotor gemäß den im Oberbegriff der Ansprüche 3 bis 8 angegebenen Merkmalen.

Kreiselpumpenaggregate kleiner und mittlerer Leistung werden heutzutage üblicherweise von Asynchronmotoren angetrieben, die einerseits robust und andererseits kostengünstig in der Herstellung sind. Bei diesen Motoren ist regelmäßig ein Spaltrohr zwischen Rotor und Stator vorgesehen, welches den Stator gegenüber dem Förderfluid abdichtet. Dieses Spaltrohr wird üblicherweise aus austenitischem Edelstahl gefertigt, um es korrosionsfest zu gestalten. Hierdurch wird allerdings die magnetische Leitung zwischen Stator und Rotor und damit auch der Wirkungsgrad des Motors herabgesetzt.

Im Zuge der knapper werdenden Ressourcen und der ständig teurer werdenden Energien ist man bemüht, den Wirkungsgrad auch solcher Kreiselpumpenaggregate kleiner und mittlerer Leistung zu steigern. Hierzu ist es bekannt, Gleichstrommotoren einzusetzen. Aufgrund der regelmäßig nur zur Verfügung stehenden Wechselstromversorgung ist es jedoch beim Einsatz von Gleichstrommotoren erforderlich, eine entsprechende Umrichterelektronik vorzuschalten, die erhebliche zusätzliche Herstellungskosten bedingt.

Zur Verbesserung des Wirkungsgrades eines Asynchronmotors ist es zwar bekannt, ein magnetisch leitendes Spaltrohr einzusetzen (DE 25 28 808 C2), doch hat sich diese Maßnahme insbesondere bei Kreiselpumpenaggregaten als wenig praktikabel erwiesen, da die dann im Spalt auftretenden Oberwellen zu ganz erheblichen Geräuschentwicklungen führen, die aufgrund der üblicherweise starren Einbindung des Pumpenaggregats in die Verrohrung einer Anlage sowie auch wegen der durch das Förderfluid gebildeten akustischen Verbindung in nahezu alle Bereiche des Rohrnetzes übertragen wird. Insbesondere im Hausbereich ist eine solche Geräuschbelastung nicht tolerierbar.

Vor diesem Hintergrund liegt der vorliegenden Erfindung die Aufgabe zugrunde, ein Verfahren zum Auslegen der Statorwicklung eines Asynchronmotors eines Kreiselpumpenaggregats zu schaffen, das den Einsatz eines wirkungsgradsteigernden, magnetisch leitenden Spaltrohrs ermöglicht, jedoch die üblicherweise damit einhergehende Geräuschentwicklung vermindert. Darüber hinaus soll ein Kreiselpumpenaggregat mit entsprechend modifiziertem Asynchronmotor geschaffen werden, der einerseits die Anforderungen an einen besseren Wirkungsgrad und andererseits die Anforderungen hinsichtlich der Geräuschemission erfüllt.

Der verfahrensmäßige Teil dieser Aufgabe wird durch die in Anspruch 1 angegebenen Merkmale gelöst. Vorteilhafte Ausgestaltungen des erfindungsgemäßen Verfahrens sind in den Unteransprüchen sowie der nachfolgenden Beschreibung und Zeichnung angegeben. Die Ansprüche 4 bis 9 stellen konkrete Wicklungsverteilungen dar, welche die vorgenannten Kriterien erfüllen.

Grundgedanke der vorliegenden Erfindung ist es, einerseits die wirkungsgradsteigernden Vorteile des magnetisch leitenden Spaltrohrs zu nutzen und andererseits durch die erfindungsgemäße Wicklungsspreizung die Geräuschemission des Motors in Grenzen zu halten. Hierzu sieht die Erfindung vor, die Verteilung der Wicklungen in den Statornuten so vorzunehmen, dass die Amplitude der das Antriebsmoment erzeugenden ersten harmonischen Schwingung 0,75 bis 0,85 des theoretischen Maximalwerts der Amplitude der ersten harmonischen Schwingung bezogen auf die in einem Nutpaar konzentrierte Wicklung beträgt und dass die Amplitude mindestens der nachfolgenden zwei höher geordneten ungeraden Schwingungen eine Größe von höchstens 15 % des vorgenannten Maximalwerts annehmen und in ihrer Größe voneinander mit Ausnahme der nutharmonischen höchstens um 50 % abweichen. Dabei ist unter theoretischem Maximalwert der ersten harmonischen Schwingung bezogen auf die in einem Nutpaar konzentrierte Wicklung die sich rechnerisch ergebende maximale Amplitude der ersten harmonischen Schwingung gemeint, und zwar unter Zugrundelegung der Bedingung, dass die gesamte Wicklung eines Pols optimal, d. h. innerhalb der Polachse in nur einem Nutenpaar des Stators angeordnet ist. Es versteht sich, dass dieser Maximalwert in der Mehrzahl aller Fälle ein theoretischer sein muß, da bei üblicher Wicklungsauslegung eine Anordnung sämtlicher Wicklungen in einem Nutpaar nicht möglich ist.

Durch diese Auslegung werden im Wesentlichen die Spitzen der Geräuschentwicklung abgebaut, wobei die üblicherweise mit der Wicklungsspreizung einhergehenden Wirkungsgradverschlechterungen in Grenzen gehalten werden können. Insgesamt kann bei einem Kreiselpumpenaggregat der eingangs genannten Art mit dieser Maßnahme eine Wirkungsgradsteigerung von etwa 7 % erreicht werden, wobei durch die Wicklungsspreizung in der Fertigung praktisch keine zusätzlichen Kosten anfallen. Wenn man etwa davon ausgeht, dass ohne die erfindungsgemäße Wicklungsauslegung nur durch Einsatz des magnetisch leitenden Spaltrohrs eine Wirkungsgradsteigerung von etwa 10 % erreichbar ist, dann wird deutlich, dass die erfindungsgemäße Auslegung der Wicklung einen guten Kompromiss zwischen Wirkungsgradsteigerung und Geräuschentwicklung darstellt, davon ausgehend, dass bei der erfindungsgemäßen Auslegung der Ständerwicklung die Geräuschentwicklung des Motors und damit des Pumpenaggregats etwa der konventioneller Pumpenaggregate mit austenitischem Spaltrohr entspricht.

Der physikalische Zusammenhang zwischen Wicklungsverteilung in den Statornuten und der Amplitude der im Luftspalt entstehenden harmonischen Schwingungen ist hinlänglich bekannt. Es wird in diesem Zusammenhang nur beispielhaft auf Schuisky, Dr.-Ing. W. Induktionsmaschinen, Springer Verlag, Wien, 1997 verwiesen. Dort ist beispielsweise auf den Seiten 109 ff. Entstehung und Wirkung solcher Oberwellen sowie deren mathematische Erfassung beschrieben. Wie sich hieraus weiter ergibt, ist es auch bekannt, wie durch Wicklungsspreizung die Oberwellen bestimmter harmonischer Schwingungen eliminiert werden können. So ist auf den Seiten 120 ff. die Eliminierung der dritten harmonischen Schwingung beschrieben, auf den Seiten 125 ff. die Unterdrückung der Oberwellen der fünften und siebten harmonischen Schwingung. Letzteres erfolgt beispielsweise durch sogenannte Wicklungsverkürzung.

Die erfindungsgemäße Lösung zum Auslegen der Statorwicklung geht den ungewöhnlichen Weg, die Amplitude der das Antriebsmoment erzeugenden ersten harmonischen Schwingung auf das 0,75- bis 0,85-fache des theoretischen Maximalwerts der Amplitude der ersten harmonischen Schwingung bezogen auf die in einem Nutpaar konzentrierte Wicklung zu begrenzen, wodurch zunächst einmal das Antriebsmoment verringert und somit auch der Wirkungsgrad verschlechtert wird. Erstaunlicherweise genügt jedoch diese schon geringfügige Reduzierung, um das Geräuschniveau der dritten und fünften und ggf. weiterer ungerader harmonischer Schwingungen grundlegend herabzusetzen, wobei die Größe der Amplitude der dritten und fünften harmonischen Schwingung bzw. nachfolgender Schwingungen höchstens 15 % dieses vorgenannten Maximalwerts betragen soll und diese in ihrer Größe voneinander mit Ausnahme der nutharmonischen höchstens um 50 % abweichen dürfen. Von der vorgenannten Regel ausgenommen sind also die nutharmonischen Schwingungen, also die harmonischen Schwingungen, deren Ordnung um 1 von der Nutzahl des Motors abweichen. Bei einem Motor mit 16 Nuten sind dies beispielsweise die 15. und 17. harmonische Schwingung. Diese nutharmonischen Schwingungen haben üblicherweise Amplitude in Höhe der Grundschwingung und können systembedingt nicht eliminiert oder signifikant amplitudenbegrenzt werden.

Das erfindungsgemäße Verfahren kann mit den heute üblichen rechnergestützten Simulationsmodellen iterativ ohne weiteres durchgeführt werden, bis die Amplitude in den vorgenannten gewünschten Bereichen liegen.

Eine besonders günstige Auslegung der Statorwicklung ergibt sich dann, wenn die Wicklungsverteilung so bemessen wird, dass die drei oder alle der Grundschwingung nachgeordneten ungeraden Schwingungen mit Ausnahme der nutharmonischen, also die der dritten, fünften, siebten usw. harmonischen, eine Größe von höchstens 15 % des Maximalwerts der Amplitude der ersten harmonischen Schwingung aufweisen und ebenfalls in ihrer Größe untereinander um höchstens 50 % voneinander abweichen.

In den Ansprüchen 4 bis 9 sind entsprechende Wicklungsverteilungen für einen Asynchronmotor angegeben, und zwar zwei alternative Wicklungsverteilungen für einen Motor mit 16 Statornuten, sowie Wicklungsverteilungen für Motoren mit 12, 14, 18 und 20 Statornuten. Dabei sind die Nuten fortlaufend in der Richtung umlaufend um die Motorachse beziffert. Der danach prozentual angegebene Anteil von Drähten bezieht sich auf die Wicklung (Hauptwicklung oder Hilfswicklung) eines Pols, welche die meisten Drähte in einem Nutpaar aufweist. Diese Anzahl wird zu 100 % gesetzt, alle weiteren Werte ergeben sich anhand der angegebenen Prozentzahlen. Dabei kann gegebenenfalls auch eine asymmetrische Polverteilung erfolgen, weshalb sich auch Prozentzahlen von über 100 Prozent ergeben können, wenn beispielsweise die Wicklung des anderen Pols in einer Nut mehr Drähte aufweist, als das Nutpaar, welches die meisten Drähte der Wicklung des einen Pols aufweist.

Dabei ist zu beachten, ob sich die Angaben auf Haupt- oder auf Hilfswicklung beziehen, da üblicherweise 100 % der Hauptwicklung anzahlmäßig nicht 100 % der Hilfswicklung entsprechen. So kann beispielsweise die maximale Anzahl der in einer Nut des Motors geführten Drähte der Hauptwicklung 439 betragen, während dies bei der Hilfswicklung nur 370 Drähte sind, so dass sich auch unter Zugrundelegung gleicher Prozentzahlen bei Haupt- und Hilfswicklung unterschiedliche Wicklungszahlen ergeben. Als Hilfswicklung wird definitionsgemäß die Wicklung bezeichnet, die mit einer Kapazität in Reihe geschaltet ist. Die vorstehend sowie nachfolgend angegebenen Wicklungsverteilungen sind jeweils für die Haupt- und die Hilfswicklung angegeben. Grundsätzlich ist es für die Wirksamkeit der erfindungsgemäßen Wicklungsverteilungen jedoch unerheblich, ob diese als Haupt- und Hilfswicklung oder aber umgekehrt geschaltet sind. Die Angaben zur Haupt- und Hilfswicklung sind daher im Wesentlichen als Unterscheidungskriterium zwischen den Wicklungen anzusehen, im Übrigen aber vertauschbar.

Die Erfindung ist nachfolgend anhand von in der Zeichnung dargestellten Ausführungsbeispielen näher erläutert. Es zeigen:

Fig. 1     ein Wicklungsschema für einen zweipoligen Asynchronmotor mit 16 Statornuten,

Fig. 2     die prozentual zulässige Wicklungsverteilung für einen solchen Motor gemäß der Erfindung,

Fig. 3     die prozentual zulässige Wicklungsverteilung einer alternativen Wicklungsanordnung für einen zweipoligen Motor mit 16 Statornuten,

Fig. 4     eine solche Anordnung für einen Stator mit 12 Nuten,

Fig. 5     eine solche Anordnung für einen Stator mit 14 Nuten,

Fig. 6　　　eine solche Anordnung für einen Stator mit 18 Nuten,

Fig. 7　　　eine solche Anordnung für einen Stator mit 20 Nuten,

Fig. 8　　　sechs P/Q-Diagramme des anhand der Figuren 1 und 2 dargestellten Pumpenaggregats im Vergleich zu einem Pumpenaggregat nach dem Stand der Technik,

Fig. 9　　　ein Diagramm betreffend die frequenzabhängige Geräuschemission eines Pumpenaggregats mit einer Wicklungsanordnung nach dem Stand der Technik, jedoch mit magnetisch leitendem Spaltrohr,

Fig. 10　　ein Diagramm betreffend die frequenzabhängige Geräuschentwicklung bei der erfindungsgemäßen Wicklungsverteilung mit magnetisch leitendem Spaltrohr entsprechend einer Wicklungsanordnung gemäß den Figuren 1 und 2 und

Fig. 11　　in schematischer Darstellung einen Stator mit 16 Nuten und deren Zuordnung zur Polachse.

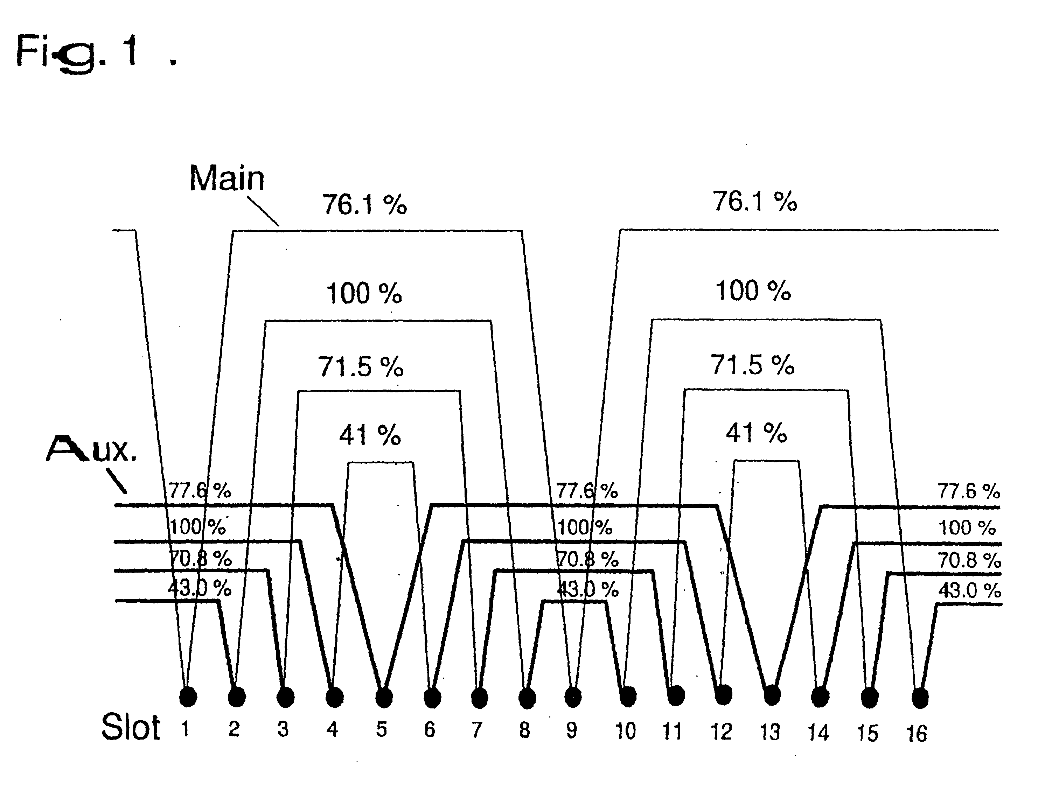

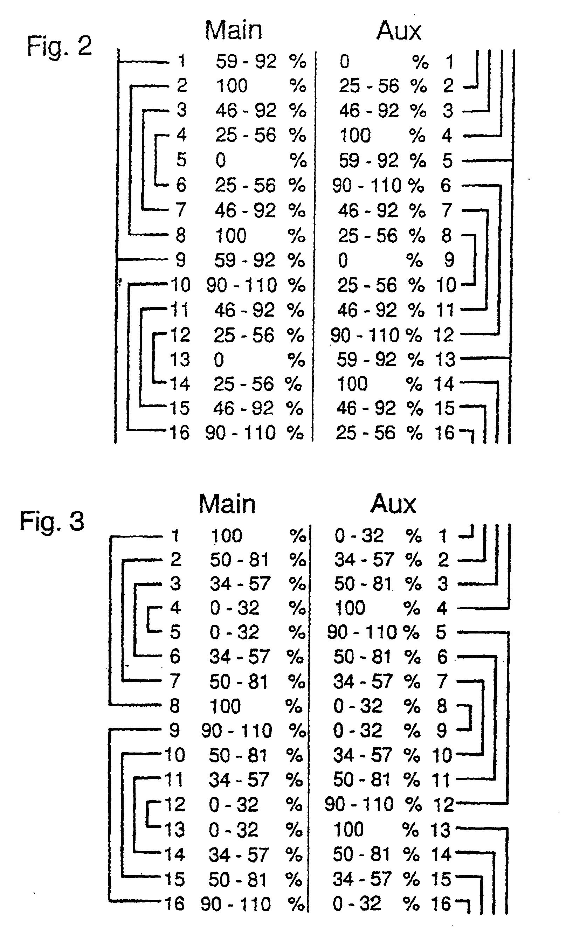

Die anhand von Fig. 1 dargestellte Wicklungsanordnung betrifft einen zweipoligen Asynchronmotor mit Haupt- und Hilfswicklung (Main und Aux) mit insgesamt 16 Statornuten, die in der Figur mit 1 bis 16 beziffert und in Abwicklung dargestellt sind. Eine Wicklungsverteilung für diese Nutanordnung ergibt sich gemäß Fig. 2.

In dem Ausführungsbeispiel gemäß Fig. 1 ist die Maximalanzahl von Drähten der Hauptwicklung in den Nuten 2 und 8 bzw. 10 und 16 geführt. Dieser Wert entspricht 100 % und im Ausführungsbeispiel konkret 439 Drähten. Ein weiterer Teil der Hauptwicklung ist durch die Nuten 3 und 7 bzw. 11 und 15 geführt. Die Anzahl der in diesen Nuten geführten Drähte darf zwischen 46 % und 92 % der in den Nuten 2 und 8 bzw. 10 und 16 geführten Drähte liegen. Im Ausführungsbeispiel sind in den Nuten 3 und 7 bzw. 11 und 15 314 Drähte geführt, das entspricht 71,5 %. Weiterhin ist die Hauptwicklung in den Nuten 1 bis 9 geführt, und zwar mit 59 % bis 92 %, im Ausführungsbeispiel gemäß Fig. 1 sind dies 334 Drähte, das entspricht 76,1 %. Schließlich ist die Hauptwicklung noch in den Nuten 4 und 6 bzw. 12 und 14 geführt, und zwar mit einem Füllgrad von 25 % bis 56 % bezogen auf einen maximalen Füllgrad von 100 % gemäß den Nuten 2, 8, 10 und 16. Im vorliegenden Ausführungsbeispiel beträgt die Drahtzahl in den Nuten 4, 6, bzw. 12, 16, 180, das entspricht 41 %. Die vorstehend beschriebene Hauptwicklung (Main) eines zweipoligen Motors ist symmetrisch angeordnet, d. h. in beiden Polen liegt die gleiche Wicklungsverteilung vor. Dies ist nicht zwingend notwendig. So kann in den Nutpaaren 1, 9; 2, 8; 3, 7; und 4, 6 eine andere Verteilung vorliegen als in den Nuten des anderen Pols 9,1; 10, 16; 11, 15 und 12, 14. Wenn beispielsweise in den Nuten 10 und 16 mehr Drähte liegen als in den Nuten 2 und 8 des anderen Pols und letzterer hier als Bezugswicklung herangezogen worden ist, dann kann sich für die Nuten 10 und 16 auch ein über 100 Prozent liegender Wert ergeben.

Die Hilfswicklung ist um 90° zur Hauptwicklung versetzt angeordnet, die Wicklungsspreizung erfolgt in ähnlicher Weise, wobei sich die Wicklungsverteilung aus Fig. 2 ergibt. Im konkreten Ausführungsbeispiel gemäß Fig. 1 ist die Hilfswicklung in den Nuten 6 und 12 bzw. 14 und 4 mit einem Füllgrad von 100 % gefüllt, im Ausführungsbeispiel gemäß Fig. 1 entspricht dies 370 Drähten. In den Nuten 5 und 13 liegen 288 Drähte (entspricht 77,6 %)entsprechend dem gemäß Fig. 2 hierfür vorgesehenen Füllgrad von 52 % bis 92 %. In den Nuten 7 und 11 bzw. 15 und 3 liegen jeweils 262 Drähte (entspricht 70,8 %) entsprechend einem Füllgrad von 46 % bis 92 %. Die Nuten 8 und 10 bzw. 16 und 2 sind jeweils mit 160 Drähten (entspricht 43 %) gefüllt entsprechend einem Füllgrad von 25 % bis 56 % bezogen auf die Füllung in den Nuten 2 und 8 bzw. 10 und 16. Das anhand von Fig. 1 beispielhaft beschriebene Wicklungsschema entspricht dem in Fig. 2 für einen mit 16 Nuten versehenen Stator angegebenen Füllverhältnis zwischen Haupt- und Hilfswicklung.

In Fig. 3 ist ein alternatives Füllverhältnis für einen Motor mit 16 Statornuten angegeben. Dort ist die Hauptwicklung jeweils mit dem maximalen Füllgrad von 100 % bzw. 90 - 110 % auf die Nutpaare 1 und 8 sowie 9 und 16 verteilt, die Spreizung erfolgt über die Nutpaare 2 und 7 bzw. 10 und 15, die 50 % bis 81 % Füllgrad aufweisen, sowie die Nutpaare 3 und 6 bzw. 11 und 14, die zwischen 34 % und 57 % Füllgrad aufweisen. Schließlich ist die Hauptwicklung noch über die Nutpaare 4 und 5 bzw. 12 und 13 mit einem Füllgrad von 0 % bis 32 % verteilt. Die Hilfswicklung ist um 90° versetzt hierzu angeordnet, die Nuten 4 und 5 sowie 12 und 13 weisen den maximalen Füllgrad von 100 % bzw. 90 - 110 % auf, die Spreizung der Hilfswicklung erfolgt über die Nutpaare 3 und 14 bzw. 6 und 11, die zu einem Füllgrad von 50 % bis 81 % gefüllt sind. Die Nuten 2 und 15 sowie 7 und 10 weisen einen Füllgrad von 34 % bis 57 % auf. Die Nuten 8 und 9 bzw. 16 und 1 weisen einen Füllgrad zwischen 0 % und 32 % auf.

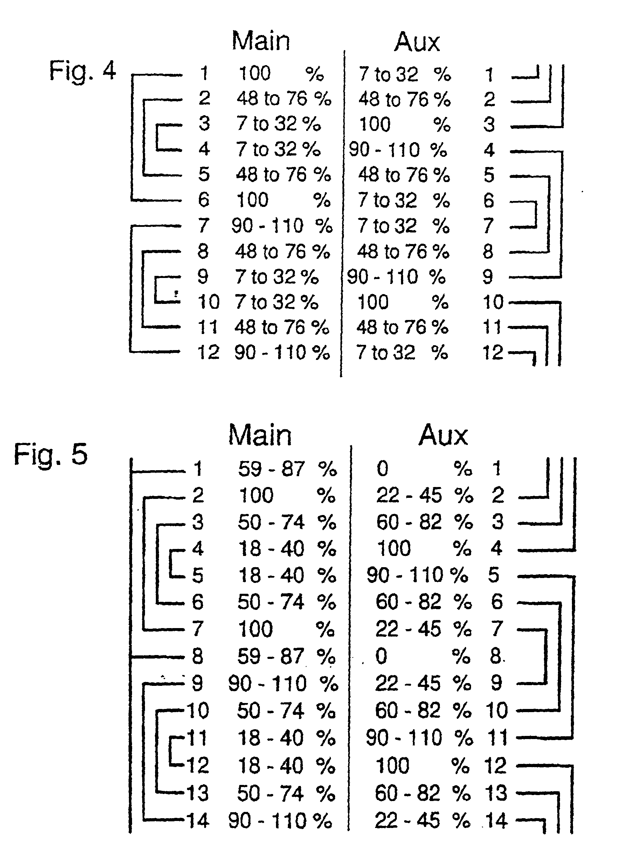

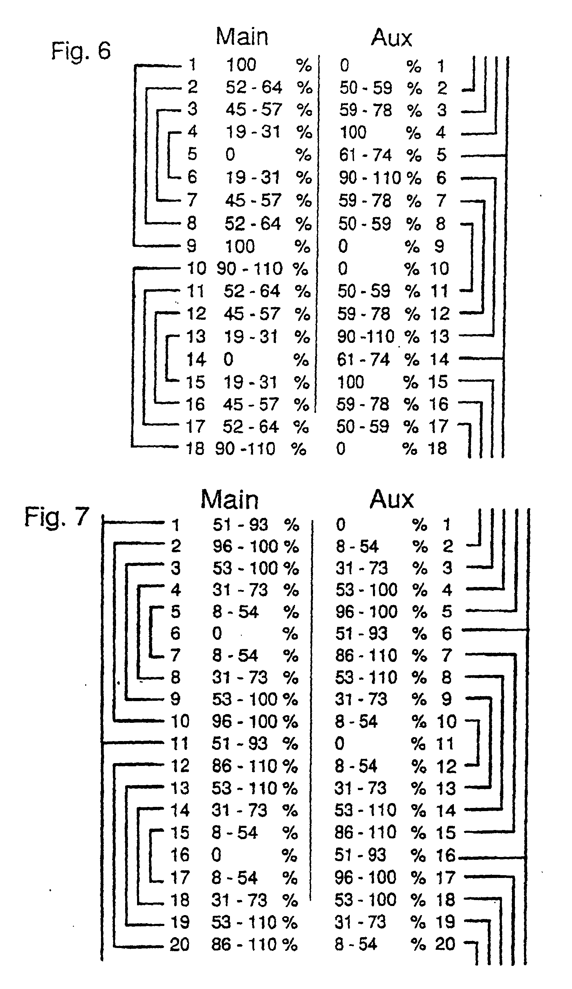

Die anhand der Figuren 4 bis 7 dargestellten Wicklungsanordnungen sind entsprechend zu verstehen und beziehen sich gemäß Fig. 4 auf einen Stator mit zwölf Nuten, gemäß Fig. 5 auf einen Stator mit 14 Nuten, gemäß Fig. 6 auf einen Stator mit 18 Nuten und gemäß Fig. 7 auf einen Stator mit 20 Nuten. Bezüglich der Wicklungsverteilung wird zur Vermeidung von Wiederholung ausdrücklich auf diese Zeichnungen bzw. die entsprechenden Angaben in den Ansprüchen verwiesen.

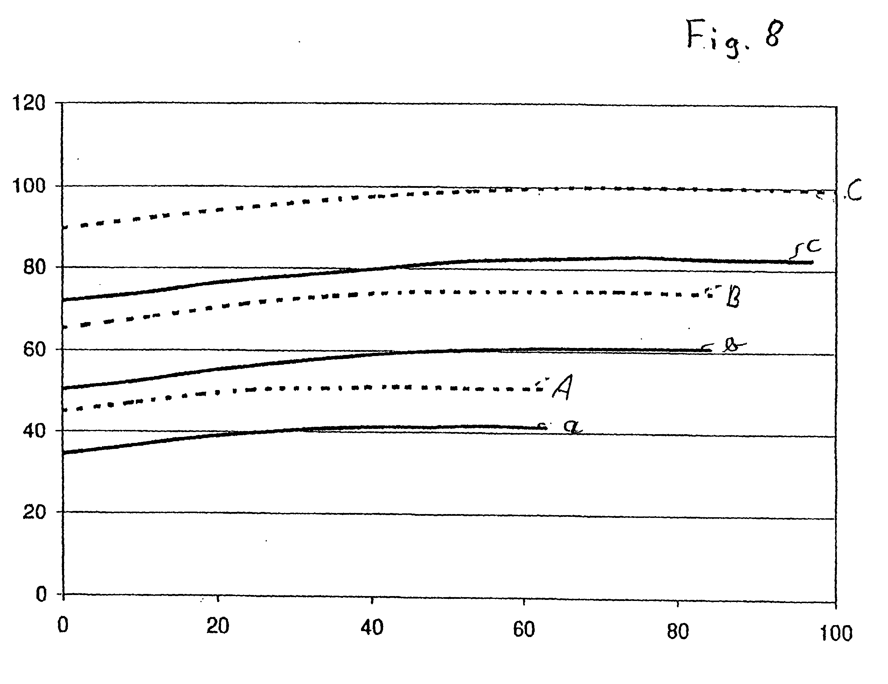

Fig. 8 zeigt sechs Kurven, welche die elektrische Leistungsaufnahme eines Pumpenaggregats in Abhängigkeit des Fördervolumens darstellen. Dabei entsprechen die in unterbrochenen Linien dargestellten Kurven A, B und C den Kurven eines Pumpenaggregats nach dem Stand der Technik mit austenitischem Spaltrohr. Die Kurve C entspricht der maximalen Förder-und Pumpenleistung, wohingegen die Kurven B und A die Förderleistung bei reduzierter Drehzahl repräsentieren, so wie dies heutzutage üblicherweise bei Pumpenaggregaten kleiner Leistung durch Einstellen eines entsprechenden Schalters möglich ist.

Die in durchgezogenen Linien dargestellten Kurven a, b und c repräsentieren die entsprechenden Kurven des erfindungsgemäßen Pumpenaggregats mit einem Asynchronmotor mit Wicklungsspreizung, so wie es anhand der Figuren 1 und 2 weiter oben im Einzelnen beschrieben worden ist. Das Pumpenaggregat weist ein magnetisch leitendes Spaltrohr auf, weshalb der Wirkungsgrad gegenüber dem Stand der Technik deutlich verbessert ist. Wie anhand der Kurven a, b, c ersichtlich ist, liegen diese mit deutlichem Abstand unter den entsprechenden Kurven A, B, C, d. h. die Pumpe hat bei vergleichbarer Förderleistung eine deutlich geringere Leistungsaufnahme.

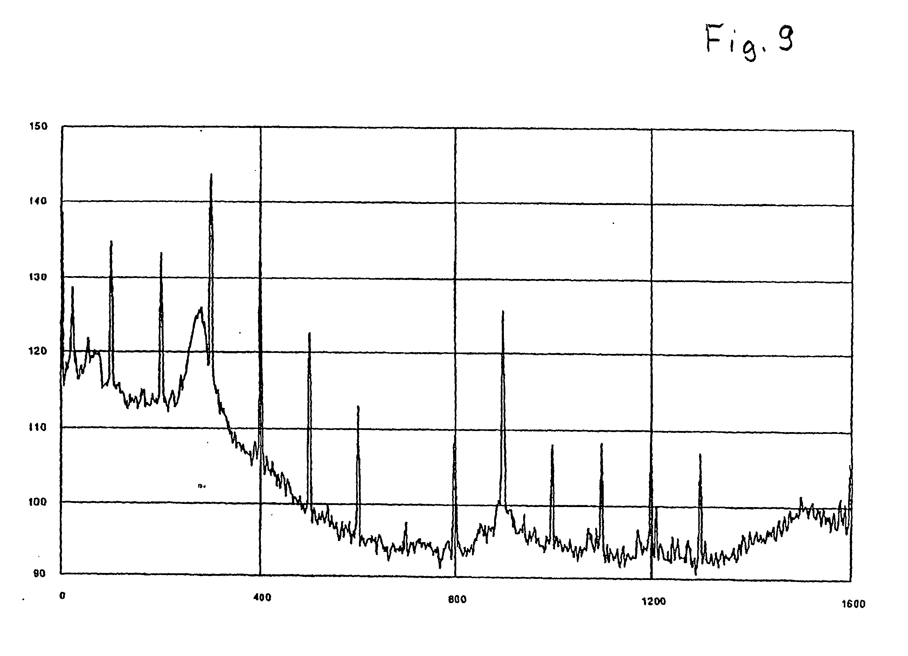

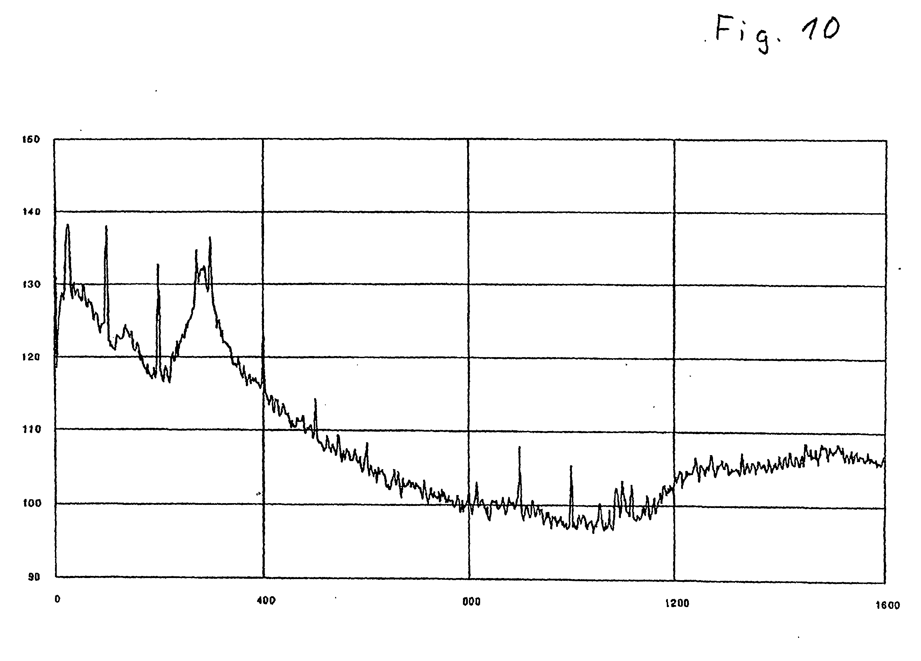

Das Diagramm gemäß Fig. 9 zeigt die Geräuschentwicklung in Abhängigkeit der Frequenz eines Pumpenaggregats nach dem Stand der Technik, bei dem das austenitische Spaltrohr durch ein magnetisch leitendes Spaltrohr ersetzt worden ist. Wie sich hier ergibt, sind zahlreiche Peaks vorhanden, deren Amplitude den sonstigen Kurvenverlauf deutlich nach oben überschreiten. Diese Peaks sind dafür verantwortlich, dass das Pumpenaggregat einen relativ hohen Geräuschpegel erzeugt. Wird hingegen das gleiche Pumpenaggregat mit magnetisch leitendem Spaltrohr, aber mit einer Wicklungsverteilung gemäß der vorliegenden Erfindung eingesetzt, so ergibt sich eine Geräuschemission gemäß Fig. 10. Deutlich sichtbar ist, dass zwar die Peaks nicht vollständig entfernt worden sind, dass sie sich jedoch in einer im Wesentlichen konstanten Bandbreit bewegen, wodurch die Geräuschemission des Pumpenaggregats ganz erheblich reduziert wird, und zwar auf ein bei Pumpenaggregate dieser Art übliches Niveau.

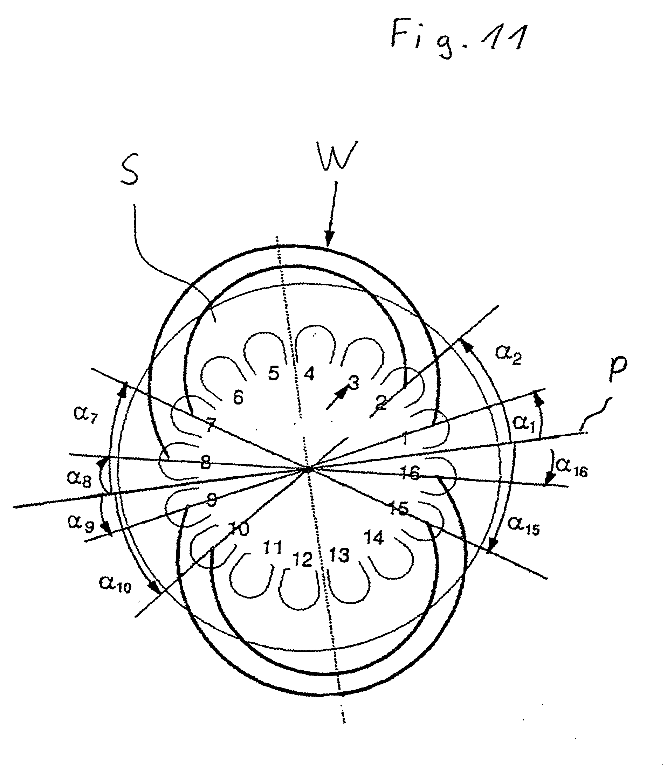

Wie bereits einleitend dargestellt, erfolgt die Wicklungsauslegung unter Zugrundelegung eines rechnerisch zu ermittelenden theoretischen Maximalwerts der Amplitude der ersten harmonischen Schwingung bezogen auf die in einem Nutpaar konzentrierte Wicklung. Was hierunter zu verstehen ist und wie diese Werte ermittelt werden, soll nachfolgend anhand von Fig. 11 erläutert werden. In Fig. 11 ist ein Stator S mit 16 über den Innenumfang verteilt angeordneten Nuten 1 bis 16 dargestellt wobei hier beispielhaft vier Nutpaare, nämlich die Nuten 2 und 7, 1 und 8, 16 und 9 sowie 15 und 10 mit einer Wicklung W versehen sind. Diese Wicklung W umschließt die Polachse P, so dass sich für jedes Nutpaar ein Winkel $\alpha_s$ ergibt, der den Abstand der jeweiligen Nut zur Polachse P angibt. So gibt der Winkel $\alpha_1$ den Winkel der Nut 1 bzw. des darin befindlichen Wicklungsteils zur Polachse P an, der Winkel $\alpha_2$ den der Nut 2 zur Polachse P usw.

Die Amplitude der ersten harmonischen Schwingung $kw_n$ errechnet sich dabei wie folgt

$$kw_n = \left( \frac{\left( \sum_{s=1}^{N_{slots}} N_s \cdot \cos(n \cdot \alpha_s) \right)}{\left( \sum_{s=1}^{N_{slots}} N_s \right)} \right)$$

Wobei n die Ordnungszahl der jeweiligen harmonischen Schwingung angibt, s die Anzahl der Nuten, auf die eine Wicklung verteilt ist, N die Anzahl der Wicklungen in den jeweiligen Nuten und $\alpha_s$ den Abstand der jeweiligen Nut von der Polachse. Der Eingangs erwähnte rechnerisch ermittelbare theoretische Maximalwert der harmonischen Schwingung ergibt sich, für n = 1 und $\alpha$ = 0 (der Kosinus von 0° ist 1) aus der Summe der Wicklungen. Entsprechend ist die Amplitude bei jeder Wicklurigsverteilung zu ermitteln. So ist in Fig. 11 die Wicklung in vier Nutenpaaren mit den jeweils angegebenen Winkeln verteilt angeordnet. Hiernach ist es soweit ohne Weiteres möglich, zu prüfen, ob eine iterativ ermittelte Wicklungsanordnung der vorliegenden Erfindung genügt oder nicht.

**Patentansprüche**

1.    Verfahren zum Auslegen der Statorwicklung eines Asynchronmotors eines Kreiselpumpenaggregats, bei dem eine Haupt- und eine Hilfswicklung jeweils über mehrere Statornuten verteilt angeordnet sind und ein magnetisch leitendes Spaltrohr zwischen Stator und Rotor vorgesehen ist, **dadurch gekennzeichnet, dass** die Verteilung der Wicklungen in den Statornuten derart erfolgt, dass die Amplitude derdas Antriebsmoment erzeugenden ersten harmonischen Schwingung 0,75 bis 0,85 des theoretischen Maximalwerts der Amplitude der ersten harmonischen Schwingung bezogen auf die in einem Nutpaar konzentrierte Wicklung beträgt und dass die Amplitude mindestens der nachfolgenden zwei höhergeordneten ungeraden Schwingungen eine Größe von höchstens 15 % des vorgenannten Maximalwerts nicht überschreiten und in ihrer Größe voneinander mit Ausnahme der nutharmonischen höchstens um 50% abweichen.

2.  Verfahren nach Anspruch 1, **dadurch gekennzeichnet, dass** die drei der Grundschwingung nachgeordneten ungeraden Schwingungen eine Größe von höchstens 15 % des theoretischen Maximalwerts der Amplitude der ersten harmonischen Schwingung bezogen auf die in einem Nutpaar konzentrierte Wicklung nicht überschreiten und in ihrer Größe untereinander höchstens um 50% abweichen.

3.  Verfahren nach Anspruch 1 oder 2, **dadurch gekennzeichnet, dass** alle der Grundschwingung nachgeordneten ungeraden Schwingungen mit Ausnahme der nutharmonischen eine Größe von höchstens 15 % des theoretischen Maximalwerts der Amplitude der ersten harmonischen Schwingung bezogen auf die in einem Nutpaar konzentrierte Wicklung nicht überschreiten und in ihrer Größe untereinander höchstens um 50 % abweichen.

4.  Kreiselpumpenaggregat mit einem Asynchronmotor mit einer Haupt- und einer Hilfswicklung, die in 16 um die Motorachse verteilt angeordneten Statornuten angeordnet sind, und mit einem magnetisch leitenden Spaltrohr zwischen Stator und Rotor, **dadurch gekennzeichnet, dass** die Aufteilung der Anzahl der durch die Nuten geführten Wicklungsdrähte jeweils bezogen auf die maximale Anzahl der in einer Nut geführten Drähte einer Wicklung eines Pols wie folgt verteilt ist:

| Hauptwicklung | Nuten 1 und 9 | 59 - 92 % |
|---|---|---|
| | Nuten 2 und 8 | 100 % |
| | Nuten 3 und 7 | 46 - 92 % |
| | Nuten 4 und 6 | 25 - 56 % |
| | Nuten 5 und 13 | 0 % |
| | Nuten 10 und 16 | 90 - 110 % |
| | Nuten 11 und 15 | 46 - 92 % |
| | Nuten 12 und 14 | 25 - 56 % |
| | | |
| Hilfswicklung | Nuten 1 und 9 | 0 % |
| | Nuten 2 und 16 | 25 - 56 % |
| | Nuten 3 und 15 | 46 - 92 % |
| | Nuten 4 und 14 | 100 % |
| | Nuten 5 und 13 | 59 - 92 % |
| | Nuten 6 und 12 | 90- 110% |
| | Nuten 7 und 11 | 46 - 92 % |
| | Nuten 8 und 10 | 25 - 56 % |

wobei die Nuten von 1 bis 16 fortlaufend in Drehrichtung um die Motorachse nummeriert sind.

5.  Kreiselpumpenaggregat mit einem Asynchronmotor mit einer Haupt- und einer Hilfswicklung, die in 16 um die Motorachse verteilt angeordneten Statornuten angeordnet sind, und mit einem magnetisch leitenden Spaltrohr zwischen Stator und Rotor, **dadurch gekennzeichnet, dass** die Aufteilung der Anzahl der durch die Nuten geführten Wicklungsdrähte jeweils bezogen auf die maximale Anzahl der in einer Nut geführten Drähte einer Wicklung eines Pols wie folgt verteilt ist:

| Hauptwicklung | Nuten 1 und 8 | 100 % |
|---|---|---|
| | Nuten 2 und 7 | 50 - 81 % |
| | Nuten 3 und 6 | 34 - 57 % |
| | Nuten 4 und 5 | 0 - 32 % |
| | Nuten 9 und 16 | 90 - 110 % |
| | Nuten 10 und 15 | 50 - 81 % |
| | Nuten 11 und 14 | 34 - 57 % |

(fortgesetzt)

| | | |
|---|---|---|
| | Nuten 12 und 13 | 0 - 32 % |
| Hilfswicklung | Nuten 1 und 16 | 0 - 32 % |
| | Nuten 2 und 15 | 34 - 57 % |
| | Nuten 3 und 14 | 50 - 81 % |
| | Nuten 4 und 13 | 100 % |
| | Nuten 5 und 12 | 90-110% |
| | Nuten 6 und 11 | 50 - 81 % |
| | Nuten 7 und 10 | 34 - 57 % |
| | Nuten 8 und 9 | 0 - 32 % |

wobei die Nuten von 1 bis 16 fortlaufend in Drehrichtung um die Motorachse nummeriert sind.

6.  Kreiselpumpenaggregat mit einem Asynchronmotor mit einer Haupt- und einer Hilfswicklung, die in 12 um die Motorachse verteilt angeordneten Statornuten angeordnet sind, und mit einem magnetisch leitenden Spaltrohr zwischen Stator und Rotor, **dadurch gekennzeichnet, dass** die Aufteilung der Anzahl der durch die Nuten geführten Wicklungsdrähte jeweils bezogen auf die maximale Anzahl der in einer Nut geführten Drähte einer Wicklung eines Pols wie folgt verteilt ist:

| | | |
|---|---|---|
| Hauptwicklung | Nuten 1 und 6 | 100 % |
| | Nuten 2 und 5 | 48 - 76 % |
| | Nuten 3 und 4 | 7 - 32 % |
| | Nuten 7 und 12 | 90 - 110 % |
| | Nuten 8 und 11 | 48 - 76 % |
| | Nuten 9 und 10 | 7 - 32 % |
| Hilfswicklung | Nuten 1 und 12 | 7 - 32 % |
| | Nuten 2 und 11 | 48 - 76 % |
| | Nuten 3 und 10 | 100 % |
| | Nuten 4 und 9 | 90 - 110 % |
| | Nuten 5 und 8 | 48 - 76 % |
| | Nuten 6 und 7 | 7 - 32 % |

wobei die Nuten von 1 bis 12 fortlaufend in Drehrichtung um die Motorachse nummeriert sind.

7.  Kreiselpumpenaggregat mit einem Asynchronmotor mit einer Haupt- und einer Hilfswicklung, die in 14 um die Motorachse verteilt angeordneten Statornuten angeordnet sind, und mit einem magnetisch leitenden Spaltrohr zwischen Stator und Rotor, **dadurch gekennzeichnet, dass** die Aufteilung der Anzahl der durch die Nuten geführten Wicklungsdrähte jeweils bezogen auf die maximale Anzahl der in einer Nut geführten Drähte einer Wicklung eines Pols wie folgt verteilt ist:

| | | |
|---|---|---|
| Hauptwicklung | Nuten 1 und 8 | 59 - 87 % |
| | Nuten 2 und 7 | 100 % |
| | Nuten 3 und 6 | 50 - 74 % |
| | Nuten 4 und 5 | 18 - 40 % |
| | Nuten 9 und 14 | 90 - 110 % |
| | Nuten 10 und 13 | 50 - 74 % |
| | Nuten 11 und 12 | 18-40% |
| Hilfswicklung | Nuten 1 und 8 | 0 % |
| | Nuten 2 und 14 | 22 - 45 % |
| | Nuten 3 und 13 | 60 - 82 % |

(fortgesetzt)

|  |  |
|---|---|
| Nuten 4 und 12 | 100 % |
| Nuten 5 und 11 | 90 - 110 % |
| Nuten 6 und 10 | 60 - 82 % |
| Nuten 7 und 9 | 22 - 45 % |

wobei die Nuten von 1 bis 14 fortlaufend in Drehrichtung um die Motorachse nummeriert sind.

**8.** Kreiselpumpenaggregat mit einem Asynchronmotor mit einer Haupt- und einer Hilfswicklung, die in 18 um die Motorachse verteilt angeordneten Statornuten angeordnet sind, und mit einem magnetisch leitenden Spaltrohr zwischen Stator und Rotor, **dadurch gekennzeichnet, dass** die Aufteilung der Anzahl der durch die Nuten geführten Wicklungsdrähte jeweils bezogen auf die maximale Anzahl der in einer Nut geführten Drähte einer Wicklung eines Pols wie folgt verteilt ist:

| Hauptwicklung | Nuten 1 und 9 | 100 % |
|---|---|---|
|  | Nuten 2 und 8 | 52 - 64 % |
|  | Nuten 3 und 7 | 45 - 57 % |
|  | Nuten 4 und 6 | 19 - 31 % |
|  | Nuten 5 und 14 | 0 % |
|  | Nuten 10 und 18 | 90 - 110 % |
|  | Nuten 11 und 17 | 52 - 64 % |
|  | Nuten 12 und 16 | 45 - 57 % |
|  | Nuten 13 und 15 | 19 - 31 % |
|  |  |  |
| Hilfswicklung | Nuten 1 und 9 | 0 % |
|  | Nuten 2 und 17 | 50 - 59 % |
|  | Nuten 3 und 16 | 59 - 78 % |
|  | Nuten 4 und 15 | 100 % |
|  | Nuten 5 und 14 | 61 - 74 % |
|  | Nuten 6 und 13 | 90 - 110 % |
|  | Nuten 7 und 12 | 59 - 78 % |
|  | Nuten 8 und 11 | 50 - 59 % |
|  | Nuten 9 und 10 | 0 % |

wobei die Nuten von 1 bis 18 fortlaufend in Drehrichtung um die Motorachse nummeriert sind.

**9.** Kreiselpumpenaggregat mit einem Asynchronmotor mit einer Haupt- und einer Hilfswicklung, die in 20 um die Motorachse verteilt angeordneten Statornuten angeordnet sind, und mit einem magnetisch leitenden Spaltrohr zwischen Stator und Rotor, **dadurch gekennzeichnet, dass** die Aufteilung der Anzahl der durch die Nuten geführten Wicklungsdrähte jeweils bezogen auf die maximale Anzahl der in einer Nut geführten Drähte einer Wicklung eines Pols wie folgt verteilt ist:

| Hauptwicklung | Nuten 1 und 11 | 51 - 93 % |
|---|---|---|
|  | Nuten 2 und 10 | 96 - 100 % |
|  | Nuten 3 und 9 | 53 - 100 % |
|  | Nuten 4 und 8 | 31 - 73 % |
|  | Nuten 5 und 7 | 8 - 54 % |
|  | Nuten 6 und 16 | 0 % |
|  | Nuten 12 und 20 | 86 - 110 % |
|  | Nuten 13 und 19 | 53 - 110 % |
|  | Nuten 14 und 18 | 31 - 73 % |
|  | Nuten 15 und 17 | 8 - 54 % |

(fortgesetzt)

| Hilfswicklung | Nuten 1 und 11 | 0 % |
|---|---|---|
| | Nuten 2 und 20 | 8 - 54 % |
| | Nuten 3 und 19 | 31 - 73 % |
| | Nuten 4 und 18 | 53 - 100 % |
| | Nuten 5 und 17 | 96 - 100 % |
| | Nuten 6 und 16 | 51 - 93 % |
| | Nuten 7 und 15 | 86 - 110 % |
| | Nuten 8 und 14 | 53 - 110 % |
| | Nuten 9 und 13 | 31 - 73 % |
| | Nuten 10 und 12 | 8 - 54 % |

wobei die Nuten von 1 bis 20 fortlaufend in Drehrichtung um die Motorachse nummeriert sind.

## Claims

1. A method for designing the stator winding of an asynchronous motor of a centrifugal pump unit, with which a main and an auxiliary winding are in each case arranged distributed over several stator slots, and a magnetically conductive can is provided between the stator and the rotor, **characterised in that** the distribution of the windings in the stator slots is effected in a manner such that the amplitude of the first harmonic oscillation producing the drive moment is 0.75 to 0.85 of the theoretical maximal value of the amplitude of the first harmonic oscillation with respect to the winding concentrated in a slot pair, and that the amplitude at least of the subsequent two higher order odd oscillations does not exceed a magnitude of at the most 15% of the previously mentioned maximum value and differ from one another in their magnitude by not more than 50% with the exception of the slot harmonic.

2. A method according to claim 1, **characterised in that** the three odd oscillations following the fundamental oscillation do not exceed a magnitude of at the most 15% of the theoretical maximal value of the amplitude of the first harmonic oscillation with respect to the winding concentrated in a slot pair and in their magnitude do not differ amongst one another by more than 50%.

3. A method according to claim 1 and 2, **characterised in that** all of the odd oscillations following the fundamental oscillation with the exception of the slot harmonic do not exceed a magnitude of at the most 15% of the theoretical maximal value of the amplitude of the first harmonic oscillation with respect to the winding concentrated in a slot pair and in their magnitude do not differ amongst one another by more than 50%.

4. A centrifugal pump unit with an asynchronous motor with a main and with an auxiliary winding which are arranged in 16 stator slots arranged distributed about the motor axis, and with a magnetically conductive can between the stator and rotor, **characterised in that** the division of the number of winding wires led through the slots in each case with respect to the maximal number of the wires of a winding of a pole which are led in a slot is distributed as follows:

| Main winding: | slots 1 and 9 | 59-92 % |
|---|---|---|
| | slots 2 and 8 | 100 % |
| | slots 3 and 7 | 46-92 % |
| | slots 4 and 6 | 25-56 % |
| | slots 5 and 13 | 0 % |
| | slots 10 and 16 | 90-110% |
| | slots 11 and 15 | 46-92 % |
| | slots 12 and 14 | 25-56 % |
| | | |
| Auxiliary winding | slots 1 and 9 | 0 % |
| | slots 2 and 16 | 25-56 % |
| | slots 3 and 15 | 46-92 % |

(continued)

| | slots 4 and 14 | 100 % |
|---|---|---|
| | slots 5 and 13 | 59-92 % |
| | slots 6 and 12 | 90-110 % |
| | slots 7 and 11 | 46-92 % |
| | slots 8 and 10 | 25-56 % |

wherein the slots of 1 to 16 are numbered about the motor axis consecutively in the rotational direction.

**5.** A centrifugal pump unit with an asynchronous motor with a main and with an auxiliary winding which are arranged in 16 stator slots arranged distributed about the motor axis, and with a magnetically conductive can between the stator and rotor, **characterised in that** the division of the number of winding wires led through the slots in each case with respect to the maximal number of the wires of a winding of a pole which are led in a slot is distributed as follows:

| Main winding: | slots 1 and 8 | 100 % |
|---|---|---|
| | slots 2 and 7 | 50-81 % |
| | slots 3 and 6 | 34%-57 % |
| | slots 4 and 5 | 0-32 % |
| | slots 9 and 16 | 90-110 % |
| | slots 10 and 15 | 50-81 % |
| | slots 11 and 14 | 34-57 % |
| | slots 12 and 13 | 0-32% |
| | | |
| Auxiliary winding | slots 1 and 16 | 0-32 % |
| | slots 2 and 15 | 34-57 % |
| | slots 3 and 14 | 50-81 % |
| | slots 4 and 13 | 100 % |
| | slots 5 and 12 | 90-110 % |
| | slots 6 and 11 | 50-81 % |
| | slots 7 and 10 | 34-57 % |
| | slots 8 and 9 | 0-32 % |

wherein the slots of 1 to 16 are numbered about the motor axis consecutively in the rotational direction.

**6.** A centrifugal pump unit with an asynchronous motor with a main and with an auxiliary winding which are arranged in 12 stator slots arranged distributed about the motor axis, and with a magnetically conductive can between the stator and rotor, **characterised in that** the division of the number of winding wires led through the slots in each case with respect to the maximal number of the wires of a winding of a pole which are led in a slot is distributed as follows:

| Main winding: | slots 1 and 6 | 100 % |
|---|---|---|
| | slots 2 and 5 | 48-76 % |
| | slots 3 and 4 | 7-32 % |
| | slots 7 and 12 | 90-110 % |
| | slots 8 and 11 | 48-76 % |
| | slots 9 and 10 | 7-32 % |
| | | |
| Auxiliary winding | slots 1 and 12 | 7-32 % |
| | slots 2 and 11 | 48-76 % |
| | slots 3 and 10 | 100 % |
| | slots 4 and 9 | 90-110 % |
| | slots 5 and 8 | 48-76 % |

(continued)

| | slots 6 and 7 | 7-32 % |
|---|---|---|

wherein the slots of 1 to 12 are numbered about the motor axis consecutively in the rotational direction.

7. A centrifugal pump unit with an asynchronous motor with a main and with an auxiliary winding which are arranged in 14 stator slots arranged distributed about the motor axis, and with a magnetically conductive can between the stator and rotor, **characterised in that** the division of the number of winding wires led through the slots in each case with respect to the maximal number of the wires of a winding of a pole which are led in a slot is distributed as follows:

| Main winding: | slots 1 and 8 | 59-87 % |
|---|---|---|
| | slots 2 and 7 | 100 % |
| | slots 3 and 6 | 50-74 % |
| | slots 4 and 5 | 18-40 % |
| | slots 9 and 14 | 90-110 % |
| | slots 10 and 13 | 50-74 % |
| | slots 11 and 12 | 18-40 % |
| | | |
| Auxiliary winding | slots 1 and 8 | 0 % |
| | slots 2 and 14 | 22-45 % |
| | slots 3 and 13 | 60-82 % |
| | slots 4 and 12 | 100 % |
| | slots 5 and 11 | 90-110% |
| | slots 6 and 10 | 60-82 % |
| | slots 7 and 9 | 22-45 % |

wherein the slots of 1 to 14 are numbered about the motor axis consecutively in the rotational direction.

8. A centrifugal pump unit with an asynchronous motor with a main and with an auxiliary winding which are arranged in 18 stator slots arranged distributed about the motor axis, and with a magnetically conductive can between the stator and rotor, **characterised in that** the division of the number of winding wires led through the slots in each case with respect to the maximal number of the wires of a winding of a pole which are led in a slot is distributed as follows:

| Main winding: | slots 1 and 9 | 100 % |
|---|---|---|
| | slots 2 and 8 | 52-64 % |
| | slots 3 and 7 | 45-57 % |
| | slots 4 and 6 | 19-31 % |
| | slots 5 and 14 | 0 % |
| | slots 10 and 18 | 90-110 % |
| | slots 11 and 17 | 52-64 % |
| | slots 12 and 16 | 45-57 % |
| | slots 13 and 15 | 19-31 % |
| | | |
| Auxiliary winding | slots and 9 | 0 % |
| | slots 2 and 17 | 50-59 % |
| | slots 3 and 16 | 59-78 % |
| | slots 4 and 15 | 100 % |
| | slots 5 and 14 | 61-74 % |
| | slots 6 and 13 | 90-110 % |
| | slots 7 and 12 | 59-78 % |
| | slots 8 and 11 | 50-59 % |

(continued)

| | slots 9 and 10 | 0 % |
|---|---|---|

wherein the slots of 1 to 18 are numbered about the motor axis consecutively in the rotational direction.

**9.** A centrifugal pump unit with an asynchronous motor with a main and with an auxiliary winding which are arranged in 20 stator slots arranged distributed about the motor axis, and with a magnetically conductive can between the stator and rotor, **characterised in that** the division of the number of winding wires led through the slots in each case with respect to the maximal number of the wires of a winding of a pole which are led in a slot is distributed as follows:

| Main winding: | slots 1 and 11 | 51-93 % |
|---|---|---|
| | slots 2 and 10 | 96-100 % |
| | slots 3 and 9 | 53-100 % |
| | slots 4 and 8 | 31-73 % |
| | slots 5 and 7 | 8-54 % |
| | slots 6 and 16 | 0 % |
| | slots 12 and 20 | 86-110 % |
| | slots 13 and 19 | 53-110 % |
| | slots 14 and 18 | 31-73 % |
| | slots 15 and 17 | 8-54 % |
| | | |
| Auxiliary winding | slots 1 and 11 | 0 % |
| | slots 2 and 20 | 8-54 % |
| | slots 3 and 19 | 31-73 % |
| | slots 4 and 18 | 53-100 % |
| | slots 5 and 17 | 96-100 % |
| | slots 6 and 16 | 51-93 % |
| | slots 7 and 15 | 86-110 % |
| | slots 8 and 14 | 53-110 % |
| | slots 9 and 13 | 31-73 % |
| | slots 10 and 12 | 8-54 % |

wherein the slots of 1 to 20 are numbered about the motor axis consecutively in the rotational direction.

**Revendications**

**1.** Procédé pour concevoir l'enroulement du stator d'un moteur asynchrone d'un agrégat de pompe centrifuge, dans lequel un enroulement primaire et un enroulement secondaire sont respectivement répartis sur plusieurs encoches de stator et une gaine de moteur à conduction magnétique est prévue entre le stator et un rotor, **caractérisé en ce que** la répartition des enroulements dans les encoches de stator se fait de façon telle que l'amplitude de la première oscillation harmonique générant le couple d'entraînement correspond à une valeur comprise entre 0,75 et 0,85 de la valeur maximale théorique de l'amplitude de la première oscillation harmonique, sur la base de l'enroulement concentré dans une paire d'encoches, et **en ce que** l'amplitude d'au moins les deux oscillations impaires supérieures suivantes ne dépasse pas une grandeur au plus égale à 15 % de la valeur maximale précédemment nommée et que leurs valeurs ne dévient pas entre elles de plus de 50 % au maximum, à l'exception de l'harmonique d'encoche.

**2.** Procédé selon la revendication 1, **caractérisé en ce que** les trois oscillations impaires subordonnées à l'oscillation fondamentale ne dépassent pas une grandeur d'au plus 15 % de la valeur maximum théorique d'amplitude de la première oscillation harmonique, sur la base de l'enroulement concentré dans une paire d'encoches et ont des valeurs qui ne dévient pas entre elles de plus de 50 %.

**3.** Procédé selon la revendication 1 ou 2, **caractérisé en ce que** toutes les oscillations impaires subordonnées à l'oscillation fondamentale, à l'exception de l'harmonique d'encoche, ne dépassent pas une grandeur d'au plus 15 % de la valeur maximum théorique d'amplitude de la première oscillation harmonique, sur la base de l'enroulement concentré dans une paire d'encoches et ont des valeurs qui ne dévient pas entre elles de plus de 50%.

**4.** Agrégat de pompe centrifuge équipée d'un moteur asynchrone présentant un enroulement primaire et un enroulement secondaire, qui sont disposés dans 16 encoches de stator réparties autour de l'axe du moteur, et équipé d'une gaine de moteur à conduction magnétique entre stator et rotor, **caractérisé en ce que** la répartition du nombre des fils d'enroulement guidés à travers les encoches, sur la base du nombre maximum de fils d'un enroulement d'un pôle guidés dans une encoche, se fait comme suit :

| | | |
|---|---|---|
| Enroulement primaire | Encoches 1 et 9 | 59 - 92 % |
| | Encoches 2 et 8 | 100 % |
| | Encoches 3 et 7 | 46 - 92 % |
| | Encoches 4 et 6 | 25 - 56 % |
| | Encoches 5 et 13 | 0 % |
| | Encoches 10 et 16 | 90 - 110 % |
| | Encoches 11 et 15 | 46 - 92 % |
| | Encoches 12 et 14 | 25 - 56 % |
| Enroulement secondaire | Encoches 1 et 9 | 0 % |
| | Encoches 2 et 16 | 25 - 56 % |
| | Encoches 3 et 15 | 46 - 92 % |
| | Encoches 4 et 14 | 100 % |
| | Encoches 5 et 13 | 59 - 92 % |
| | Encoches 6 et 12 | 90 - 110 % |
| | Encoches 7 et 11 | 46 - 92 % |
| | Encoches 8 et 10 | 25 - 56 % |

les encoches 1 à 16 étant numérotées en continu dans le sens de rotation autour de l'axe du moteur.

**5.** Agrégat de pompe centrifuge équipée d'un moteur asynchrone présentant un enroulement primaire et un enroulement secondaire, qui sont disposés dans 16 encoches de stator réparties autour de l'axe du moteur, et équipé d'une gaine de moteur à conduction magnétique entre stator et rotor, **caractérisé en ce que** la répartition du nombre des fils d'enroulement guidés à travers les encoches, sur la base du nombre maximum de fils d'un enroulement d'un pôle guidés dans une encoche, se fait comme suit :

| | | |
|---|---|---|
| Enroulement primaire | Encoches 1 et 8 | 100 % |
| | Encoches 2 et 7 | 50 - 81 % |
| | Encoches 3 et 6 | 34 - 57 % |
| | Encoches 4 et 5 | 0 - 32 % |
| | Encoches 9 et 16 | 90 - 110 % |
| | Encoches 10 et 15 | 50 - 81 % |
| | Encoches 11 et 14 | 34 - 57 % |
| | Encoches 12 et 13 | 0 - 32 % |
| Enroulement secondaire | Encoches 1 et 16 | 0 - 32 % |
| | Encoches 2 et 15 | 34 - 57 % |
| | Encoches 3 et 14 | 50 - 81 % |
| | Encoches 4 et 13 | 100 % |
| | Encoches 5 et 12 | 90 - 110 % |
| | Encoches 6 et 11 | 50 - 81 % |
| | Encoches 7 et 10 | 34 - 57 % |
| | Encoches 8 et 9 | 0 - 32 % |

les encoches 1 à 16 étant numérotées en continu dans le sens de rotation autour de l'axe du moteur.

**6.** Agrégat de pompe centrifuge équipée d'un moteur asynchrone présentant un enroulement primaire et un enroulement secondaire, qui sont disposés dans 12 encoches de stator réparties autour de l'axe du moteur, et équipé d'une gaine de moteur à conduction magnétique entre stator et rotor, **caractérisé en ce que** la répartition du nombre des fils d'enroulement guidés à travers les encoches, sur la base du nombre maximum de fils d'un enroulement d'un pôle guidés dans une encoche, se fait comme suit :

| Enroulement primaire | Encoches 1 et 6 | 100 % |
|---|---|---|
| | Encoches 2 et 5 | 48 - 76 % |
| | Encoches 3 et 4 | 7 - 32 % |
| | Encoches 7 et 12 | 90 - 110 % |
| | Encoches 8 et 11 | 48 - 76 % |
| | Encoches 9 et 10 | 7 - 32 % |
| Enroulement secondaire | Encoches 1 et 12 | 7 - 32 % |
| | Encoches 2 et 11 | 48 - 76 % |
| | Encoches 3 et 10 | 100 % |
| | Encoches 4 et 9 | 90 - 110 % |
| | Encoches 5 et 8 | 48 - 76 % |
| | Encoches 6 et 7 | 7 - 32 % |

les encoches 1 à 12 étant numérotées en continu dans le sens de rotation autour de l'axe du moteur.

**7.** Agrégat de pompe centrifuge équipée d'un moteur asynchrone présentant un enroulement primaire et un enroulement secondaire, qui sont disposés dans 14 encoches de stator réparties autour de l'axe du moteur, et équipé d'une gaine de moteur à conduction magnétique entre stator et rotor, **caractérisé en ce que** la répartition du nombre des fils d'enroulement guidés à travers les encoches, sur la base du nombre maximum de fils d'un enroulement d'un pôle guidés dans une encoche, se fait comme suit :

| Enroulement primaire | Encoches 1 et 8 | 59 - 87 % |
|---|---|---|
| | Encoches 2 et 7 | 100 % |
| | Encoches 3 et 6 | 50 - 74 % |
| | Encoches 4 et 5 | 18 - 40 % |
| | Encoches 9 et 14 | 90 - 110 % |
| | Encoches 10 et 13 | 50 - 74 % |
| | Encoches 11 et 12 | 18 - 40 % |
| Enroulement secondaire | Encoches 1 et 8 | 0 % |
| | Encoches 2 et 14 | 22 - 45 % |
| | Encoches 3 et 13 | 60 - 82 % |
| | Encoches 4 et 12 | 100 % |
| | Encoches 5 et 11 | 90 - 110 % |
| | Encoches 6 et 10 | 60 - 82 % |
| | Encoches 7 et 9 | 22 - 45 % |

les encoches 1 à 14 étant numérotées en continu dans le sens de rotation autour de l'axe du moteur.

**8.** Agrégat de pompe centrifuge équipée d'un moteur asynchrone présentant un enroulement primaire et un enroulement secondaire, qui sont disposés dans 18 encoches de stator réparties autour de l'axe du moteur, et équipé d'une gaine de moteur à conduction magnétique entre stator et rotor, **caractérisé en ce que** la répartition du nombre des fils d'enroulement guidés à travers les encoches, sur la base du nombre maximum de fils d'un enroulement d'un pôle guidés dans une encoche, se fait comme suit :

| Enroulement primaire | Encoches 1 et 9 | 100 % |
|---|---|---|
| | Encoches 2 et 8 | 52 - 64 % |
| | Encoches 3 et 7 | 45 - 57 % |
| | Encoches 4 et 6 | 19 - 31 % |

(suite)

| | Encoches 5 et 14 | 0 % |
|---|---|---|
| | Encoches 10 et 18 | 90 - 110 % |
| | Encoches 11 et 17 | 52 - 64 % |
| | Encoches 12 et 16 | 45 - 57 % |
| | Encoches 13 et 15 | 19 - 31 % |
| Enroulement secondaire | Encoches 1 et 9 | 0 % |
| | Encoches 2 et 17 | 50 - 59 % |
| | Encoches 3 et 16 | 59 - 78 % |
| | Encoches 4 et 15 | 100 % |
| | Encoches 5 et 14 | 61 - 74 % |
| | Encoches 6 et 13 | 90 - 110 % |
| | Encoches 7 et 12 | 59 - 78 % |
| | Encoches 8 et 11 | 50 - 59 % |
| | Encoches 9 et 10 | 0 % |

les encoches 1 à 18 étant numérotées en continu dans le sens de rotation autour de l'axe du moteur.

**9.** Agrégat de pompe centrifuge équipée d'un moteur asynchrone présentant un enroulement primaire et un enroulement secondaire, qui sont disposés dans 20 encoches de stator réparties autour de l'axe du moteur, et équipé d'une gaine de moteur à conduction magnétique entre stator et rotor, **caractérisé en ce que** la répartition du nombre des fils d'enroulement guidés à travers les encoches, sur la base du nombre maximum de fils d'un enroulement d'un pôle guidés dans une encoche, se fait comme suit :

| | Encoches 1 et 11 | 51 - 93 % |
|---|---|---|
| Enroulement primaire | Encoches 2 et 10 | 96 - 100 % |
| | Encoches 3 et 9 | 53 - 100 % |
| | Encoches 4 et 8 | 31-73% |
| | Encoches 5 et 7 | 8 - 54 % |
| | Encoches 6 et 16 | 0 % |
| | Encoches 12 et 20 | 86 - 110 % |
| | Encoches 13 et 19 | 53 - 110 % |
| | Encoches 14 et 18 | 31 - 73 % |
| | Encoches 15 et 17 | 8 - 54 % |
| Enroulement secondaire | Encoches 1 et 11 | 0 % |
| | Encoches 2 et 20 | 8 - 54 % |
| | Encoches 3 et 19 | 31 - 73 % |
| | Encoches 4 et 18 | 53 - 100 % |
| | Encoches 5 et 17 | 96 - 100 % |
| | Encoches 6 et 16 | 51 - 93 % |
| | Encoches 7 et 15 | 86 - 110 % |
| | Encoches 8 et 14 | 53 - 110 % |
| | Encoches 9 et 13 | 31 - 73 % |
| | Encoches 10 et 12 | 8 - 54 % |

les encoches 1 à 20 étant numérotées en continu dans le sens de rotation autour de l'axe du moteur.

Fig. 1 .

**Fig. 2**

| | Main | | | Aux | | |
|---|---|---|---|---|---|---|
| 1 | 59 - 92 | % | | 0 | % | 1 |
| 2 | 100 | % | | 25 - 56 | % | 2 |
| 3 | 46 - 92 | % | | 46 - 92 | % | 3 |
| 4 | 25 - 56 | % | | 100 | % | 4 |
| 5 | 0 | % | | 59 - 92 | % | 5 |
| 6 | 25 - 56 | % | | 90 - 110 | % | 6 |
| 7 | 46 - 92 | % | | 46 - 92 | % | 7 |
| 8 | 100 | % | | 25 - 56 | % | 8 |
| 9 | 59 - 92 | % | | 0 | % | 9 |
| 10 | 90 - 110 | % | | 25 - 56 | % | 10 |
| 11 | 46 - 92 | % | | 46 - 92 | % | 11 |
| 12 | 25 - 56 | % | | 90 - 110 | % | 12 |
| 13 | 0 | % | | 59 - 92 | % | 13 |
| 14 | 25 - 56 | % | | 100 | % | 14 |
| 15 | 46 - 92 | % | | 46 - 92 | % | 15 |
| 16 | 90 - 110 | % | | 25 - 56 | % | 16 |

**Fig. 3**

| | Main | | | Aux | | |
|---|---|---|---|---|---|---|
| 1 | 100 | % | | 0 - 32 | % | 1 |
| 2 | 50 - 81 | % | | 34 - 57 | % | 2 |
| 3 | 34 - 57 | % | | 50 - 81 | % | 3 |
| 4 | 0 - 32 | % | | 100 | % | 4 |
| 5 | 0 - 32 | % | | 90 - 110 | % | 5 |
| 6 | 34 - 57 | % | | 50 - 81 | % | 6 |
| 7 | 50 - 81 | % | | 34 - 57 | % | 7 |
| 8 | 100 | % | | 0 - 32 | % | 8 |
| 9 | 90 - 110 | % | | 0 - 32 | % | 9 |
| 10 | 50 - 81 | % | | 34 - 57 | % | 10 |
| 11 | 34 - 57 | % | | 50 - 81 | % | 11 |
| 12 | 0 - 32 | % | | 90 - 110 | % | 12 |
| 13 | 0 - 32 | % | | 100 | % | 13 |
| 14 | 34 - 57 | % | | 50 - 81 | % | 14 |
| 15 | 50 - 81 | % | | 34 - 57 | % | 15 |
| 16 | 90 - 110 | % | | 0 - 32 | % | 16 |

Fig. 4

|  | Main |  | Aux |  |
|---|---|---|---|---|
| 1 | 100 % | 7 to 32 % | 1 |
| 2 | 48 to 76 % | 48 to 76 % | 2 |
| 3 | 7 to 32 % | 100 % | 3 |
| 4 | 7 to 32 % | 90 - 110 % | 4 |
| 5 | 48 to 76 % | 48 to 76 % | 5 |
| 6 | 100 % | 7 to 32 % | 6 |
| 7 | 90 - 110 % | 7 to 32 % | 7 |
| 8 | 48 to 76 % | 48 to 76 % | 8 |
| 9 | 7 to 32 % | 90 - 110 % | 9 |
| 10 | 7 to 32 % | 100 % | 10 |
| 11 | 48 to 76 % | 48 to 76 % | 11 |
| 12 | 90 - 110 % | 7 to 32 % | 12 |

Fig. 5

|  | Main |  | Aux |  |
|---|---|---|---|---|
| 1 | 59 - 87 % | 0 % | 1 |
| 2 | 100 % | 22 - 45 % | 2 |
| 3 | 50 - 74 % | 60 - 82 % | 3 |
| 4 | 18 - 40 % | 100 % | 4 |
| 5 | 18 - 40 % | 90 - 110 % | 5 |
| 6 | 50 - 74 % | 60 - 82 % | 6 |
| 7 | 100 % | 22 - 45 % | 7 |
| 8 | 59 - 87 % | 0 % | 8 |
| 9 | 90 - 110 % | 22 - 45 % | 9 |
| 10 | 50 - 74 % | 60 - 82 % | 10 |
| 11 | 18 - 40 % | 90 - 110 % | 11 |
| 12 | 18 - 40 % | 100 % | 12 |
| 13 | 50 - 74 % | 60 - 82 % | 13 |
| 14 | 90 - 110 % | 22 - 45 % | 14 |

## Fig. 6

| | Main | | Aux | |
|---|---|---|---|---|
| 1 | 100 % | 0 | % | 1 |
| 2 | 52 - 64 % | 50 - 59 | % | 2 |
| 3 | 45 - 57 % | 59 - 78 | % | 3 |
| 4 | 19 - 31 % | 100 | % | 4 |
| 5 | 0 % | 61 - 74 | % | 5 |
| 6 | 19 - 31 % | 90 - 110 | % | 6 |
| 7 | 45 - 57 % | 59 - 78 | % | 7 |
| 8 | 52 - 64 % | 50 - 59 | % | 8 |
| 9 | 100 % | 0 | % | 9 |
| 10 | 90 - 110 % | 0 | % | 10 |
| 11 | 52 - 64 % | 50 - 59 | % | 11 |
| 12 | 45 - 57 % | 59 - 78 | % | 12 |
| 13 | 19 - 31 % | 90 - 110 | % | 13 |
| 14 | 0 % | 61 - 74 | % | 14 |
| 15 | 19 - 31 % | 100 | % | 15 |
| 16 | 45 - 57 % | 59 - 78 | % | 16 |
| 17 | 52 - 64 % | 50 - 59 | % | 17 |
| 18 | 90 - 110 % | 0 | % | 18 |

## Fig. 7

| | Main | | Aux | |
|---|---|---|---|---|
| 1 | 51 - 93 % | 0 | % | 1 |
| 2 | 96 - 100 % | 8 - 54 | % | 2 |
| 3 | 53 - 100 % | 31 - 73 | % | 3 |
| 4 | 31 - 73 % | 53 - 100 | % | 4 |
| 5 | 8 - 54 % | 96 - 100 | % | 5 |
| 6 | 0 % | 51 - 93 | % | 6 |
| 7 | 8 - 54 % | 86 - 110 | % | 7 |
| 8 | 31 - 73 % | 53 - 110 | % | 8 |
| 9 | 53 - 100 % | 31 - 73 | % | 9 |
| 10 | 96 - 100 % | 8 - 54 | % | 10 |
| 11 | 51 - 93 % | 0 | % | 11 |
| 12 | 86 - 110 % | 8 - 54 | % | 12 |
| 13 | 53 - 110 % | 31 - 73 | % | 13 |
| 14 | 31 - 73 % | 53 - 110 | % | 14 |
| 15 | 8 - 54 % | 86 - 110 | % | 15 |
| 16 | 0 % | 51 - 93 | % | 16 |
| 17 | 8 - 54 % | 96 - 100 | % | 17 |
| 18 | 31 - 73 % | 53 - 100 | % | 18 |
| 19 | 53 - 110 % | 31 - 73 | % | 19 |
| 20 | 86 - 110 % | 8 - 54 | % | 20 |

Fig. 8

EP 1 276 211 B1

Fig. 9

EP 1 276 211 B1

Fig. 10

Fig. 11